# EUROPÄISCHE PATENTSCHRIFT

(11) **EP 3 535 070 B1**
(45) Veröffentlichungstag und Bekanntmachung des Hinweises auf die Patenterteilung: **22.04.2026**
(21) Anmeldenummer: 17800416.4
(22) Anmeldetag: 30.10.2017
(51) Int. Cl.: B21C 1/26, B21C 23/20, B21D 22/28, H01M 50/133, B21C 23/18, H01M 50/103

(54) **VERFAHREN UND VORRICHTUNG ZUR HERSTELLUNG EINES PRISMATISCHEN BATTERIEZELLENBEHÄLTERS**
METHOD AND DEVICE FOR THE MANUFACTURE OF A PRISMATIC BATTERIE CELL CONTAINER
MÉTHODE ET APPAREIL DE FABRICATION D'UN LOGEMENT PRISMATIQUE POUR CELLULE DE BATTERIE

(30) Priorität: 04.11.2016 DE 102016121089
(43) Veröffentlichungstag der Anmeldung: 11.09.2019
(73) Patentinhaber: ANDRITZ Schuler Pressen GmbH, 73033 Göppingen (DE)
(72) Erfinder: BURKERT, Bruno, 53121 Bonn (DE)
(74) Vertreter: Rüger Abel Patentanwälte PartGmbB
(86) Internationale Anmeldenummer: PCT/EP2017/077723
(87) Internationale Veröffentlichungsnummer: WO 2018/083052

(56) Entgegenhaltungen:
- EP-A1- 1 347 519
- EP-A1- 1 447 864
- CN-A- 104 785 563
- JP-A- 2013 225 406
- KR-A- 20140 093 471
- KR-B1- 101 621 253

## Beschreibung

Die Erfindung betrifft ein Verfahren und eine Anordnung zur Herstellung eines einseitig offenen, prismatischen Batteriezellenbehälters. Der Batteriezellenbehälter kann beispielsweise eine quaderförmige Gestalt aufweisen. Der Batteriezellenbehälter dient zur Aufnahme von Kernmaterial, wie etwa einem Wickel, das die elektrische Energie bereitstellt. Nach dem Einfüllen des Kernmaterials wird der einseitig offene Batteriezellenbehälter mit Hilfe eines Deckels verschlossen.

Batteriezellenbehälter sind in verschiedenen Formen bekannt. Sie können aus metallischen Materialien oder Kunststoffmaterialien hergestellt sein. Der Bedarf an Batterien steigt zunehmend. Zum einen geht in vielen Bereichen der Trend zu batteriebetriebenen elektrischen Geräten bzw. Fahrzeugen. Zum anderen werden Batterien auch für die Speicherung von elektrischer Energie benötigt, insbesondere im Rahmen der elektrischen Energieversorgung mittels erneuerbarer Energien, wie Windkraft oder Sonnenenergie.

Aufgrund der hohen Anzahl der benötigten Batteriezellen bzw. Batteriezellenbehälter sind Verfahren notwendig, um solche Batteriezellenbehälter wirtschaftlich mit ausreichender Maßhaltigkeit herzustellen. Dabei bestehen einige Herausforderungen.

Bei der Herstellung von Batteriezellenbehälter aus einem Metall oder einer metallischen Legierung können bekannte Verfahren, wie Tiefziehen oder Fließpressen eingesetzt werden. Das Tiefziehen ist ein Verfahren der Blechumformung. Als Ausgangsmaterial wird ein Blech benötigt. Der Umformgrad im Hinblick auf das Verhältnis der Höhe des Batteriezellenbehälters zu dessen Breite ist begrenzt.

Beim Fließpressen von Batteriezellenbehältern ist ein hoher Materialeinsatz erforderlich. Die Formgebung eines derart hergestellten Batteriezellenbehälters ist auf bestimmte Geometrien bzw. Abmessungen beschränkt, um den erforderlichen Materialfluss zu erreichen.

DE 698 22 448 T2 schlägt ein Verfahren zur Herstellung eines Batteriezellenbehälters vor, bei dem ein eisenbasiertes metallisches Blech mit einer Nickelschicht auf einer Blechseite durch Ziehen in einen Napf bzw. Topf umgeformt wird. Anschließend wird durch Abstreckgleitziehen ein Batteriezellenbehälter geformt. Ein derartiges Verfahren erfordert zunächst die Herstellung eines entsprechenden Napfs bzw. Topfs für den Ziehvorgang.

Ein solches Verfahren wird als DI-Verfahren bezeichnet. Das "D" steht dabei für das englische Wort "drawing" und das "I" steht dabei für das englische Wort "ironing", also für Tiefziehen und Abstreckgleitziehen. Solche DI-Verfahren sind beispielsweise auch von der Getränkedosenherstellung bekannt.

Ähnliche Herstellungsverfahren, die mit einem Tiefziehschritt beginnen, sind auch aus DE 694 17 001 T2 und DE 698 37 291 T2 bekannt.

DE 1 001 095 A beschreibt ein Verfahren zum Herstellen zylindrischer metallischer Hohlkörper. Aus einem Butzen wird zunächst durch Pressen eine kreisrunde Scheibe mit Umfangswulst hergestellt, die anschließend durch Vorwärtsfließpressen zu einem einseitig offenen zylindrischen Körper umgeformt wird.

Aus GB 748719 A ist ein Verfahren zur Herstellung einer Batterie mit einem Batteriezellenbehälter aus Kunststoff bekannt. Das Kunststoffgehäuse ist einseitig offen und kann benachbart zur offenen Seite einen Auflagevorsprung für einen Deckel aufweisen. Der Deckel kann mittels einer kraftschlüssigen Verbindung in einer ringsum laufenden Nut am Batteriezellenbehälter eingreifen.

KR 10 162 1253 B1 beschreibt ein Verfahren zur Herstellung eines prismatischen Batteriezellenbehälters. Hierzu wird zunächst durch Fließpressen ein fließgepresster Behälter hergestellt, der anschließend durch Abstreckgleitziehen in den Batteriezellenbehälter umgeformt wird. Ein solches Verfahren ist auch aus EP 1 347 519 A1 bekannt.

Ausgehend hiervon ist es eine Aufgabe der vorliegenden Erfindung, ein verbessertes Herstellungsverfahren für einen metallischen Batteriezellenbehälter bereitzustellen, das eine wirtschaftliche Herstellung bei ausreichend guter Maßhaltigkeit gewährleistet.

Die Aufgabe wird mit einem Verfahren gemäß den Merkmalen des Patentanspruches 1 und einer Anordnung mit den Merkmalen des Patentanspruches 15 gelöst.

Erfindungsgemäß wird zunächst ein Butzen bereitgestellt. Er ist ohne Naht- und Fügestelle aus einem einheitlichen Material integral hergestellt. Der Butzen besteht aus wenigstens einem Metall und/oder wenigstens einer metallischen Legierung. Vorzugsweise besteht er aus einem Aluminiumlegierung. Der Butzen hat beispielsweise eine prismatische und beispielsweise eine quaderförmige Gestalt.

Der Butzen wird durch Fließpressen und beispielsweise Rückwärtsfließpressen zu einem fließgepressten Behälter umgeformt. Dabei handelt es sich um ein Massivumformverfahren. Der Butzen kann zum Beispiel durch Ablängen von einem stangenförmigen oder plattenförmigen Material auf einfache und kostengünstige Weise erhalten werden. Das stangenförmige oder plattenförmige Material kann durch Extrudieren eine vorgegebene rechteckige oder nicht rechteckige Querschnittsform aufweisen. Alternativ kann der Butzen aus einem Blech herausgetrennt werden, beispielsweise durch Stanzen oder Schneiden.

Der fließgepresste Behälter wird anschließend in eine erste Abstreckstation transportiert. Die erste Abstreckstation weist einen ersten Abstreckstößel und ein erstes Matrizenwerkzeug auf. Der erste Abstreckstößel ist in einer Arbeitsrichtung zum Matrizenwerkzeug hin bzw. in das Matrizenwerkzeug hinein bewegbar. Sobald er im Bereich des ersten Matrizenwerkzeugs einen Umkehrpunkt erreicht hat, kann er entgegen der Arbeitsrichtung in einer Rückzugsrichtung zurück in eine Rückzugstellung bewegt werden. Während der Bewegung in Arbeitsrichtung formt der erste Abstreckstößel in Zusammenarbeit mit dem ersten Matrizenwerkzeug den fließgepressten Behälter durch ein erstes Abstreckgleitziehen in einen abgestreckten Behälter um. Dabei wird der fließgepresste Behälter durch den ersten Abstreckstößel nicht vollständig in Arbeitsrichtung durch das erste Matrizenwerkzeug bewegt, sondern nur bis zu einem Umkehrpunkt und anschließend in einer Rückzugsrichtung gemeinsam mit dem ersten Abstreckstößel wieder aus dem Matrizenwerkzeug herausbewegt.

Nach dem ersten Abstreckgleitziehen wird der abgestreckte Behälter in eine zweite Abstreckstation transportiert und dort einem zweiten Abstreckgleitziehen mittels eines zweiten Abstreckstößels und eines zweiten Matrizenwerkzeugs unterworfen. Analog zum ersten Abstreckgleitziehen wird der abgestreckte Behälter auch in der zweiten Abstreckstation durch den zweiten Abstreckstößel in Arbeitsrichtung nur teilweise durch das zweite Matrizenwerkzeug bewegt und gemeinsam mit dem zweiten Abstreckstößel in Rückzugsrichtung wieder aus dem zweiten Matrizenwerkzeug herausbewegt. Am Ende der zweiten Abstreckstation ist der abgestreckte Behälter in einen Zwischenbehälter umgeformt. Der Zwischenbehälter ist maßhaltig in einer Längsrichtung und einer Breitenrichtung, nicht jedoch in einer Höhenrichtung, die parallel zur Arbeitsrichtung und zur Rückzugsrichtung orientiert ist.

In einem letzten Schritt wird schließlich der obere Rand des Zwischenbehälters abgetrennt und dadurch die Maßhaltigkeit auch in Höhenrichtung hergestellt und der Batteriezellenbehälter wird erhalten.

In den beiden Abstreckstationen wird der jeweilige Behälter nicht vollständig durch das betreffende Matrizenwerkzeug hindurchbewegt. Durch das Zurückziehen des Behälters in Rückzugsrichtung mittels des betreffenden Abstreckstößels ergibt sich die Möglichkeit, den in den Abstreckstationen umgeformten Behälter auf derselben Ebene weiter zu transportieren, auf der er in die betreffende Abstreckstation transportiert wurde. Dies vereinfacht den Herstellungsprozess und eine entsprechende Herstellungsvorrichtung. Das Abstreifen des Behälters von einem betreffenden Abstreckstößel erfolgt somit in Arbeitsrichtung gesehen jeweils räumlich vor dem betreffenden Matrizenwerkzeug und zeitlich nach dem Umformen während der Rückzugsbewegung des jeweiligen Abstreckstößels.

Mit diesem Verfahren lassen sich auch prismatische Batteriezellenbehälter herstellen, die in einer Breitenrichtung und eine rechtwinklig dazu orientierte Längsrichtung sehr unterschiedlich große Abmessungen aufweisen. Beispielsweise kann die Dimension in Längsrichtung um mindestens den Faktor 4 bis 5 und vorzugsweise mindestens den Faktor 7 größer sein als in Breitenrichtung. Dies gilt sowohl für prismatische Batteriezellenbehälter mit einem viereckigen oder einem mehreckigen Querschnitt bzw. Boden.

Es ist vorteilhaft, wenn der fließgepresste Behälter einen mehreckigen Boden aufweist, dessen Dimension in eine Richtung mindestens um den Faktor 4 bis 7 größer ist als in eine andere Richtung, wobei die beiden Richtungen rechtwinklig zueinander ausgerichtet sind und eine Ebene aufspannen, die sich parallel zu dem Boden erstreckt. Die Form und der Pressstempel in einer Fließpressstation sind dementsprechend dimensioniert.

Es ist vorteilhaft, wenn der Boden des fließgepressten Behälters vier Eckbereiche, zwei Längsseiten und zwei Breitenseiten aufweist. Die Längsseite kann dabei mindestens 4- bis 5-mal und vorzugsweise mindestens 7-mal länger sein als die Breitenseite.

Der fließgepresste Behälter kann wenigstens ein Paar von Längsseitenwänden aufweisen, die sich gegenüberliegen und die sich voneinander weg wölben. Die Längsseitenwände können jeweils um wenigstens eine Krümmungsachse gekrümmt bzw. gewölbt, die sich vorzugsweise parallel zur Höhenrichtung erstreckt.

Die oberen Kanten der Längsseiten und/oder Breitenseiten des fließgepressten Behälters können einen gebogenen Verlauf aufweisen und in den Eckbereichen eine geringere Höhe aufweisen als in einem mittleren Abschnitt zwischen den Eckbereichen. Eine maximale Höhe einer Seitenwand und insbesondere einer Längsseitenwand kann in dem mittleren Abschnitt um 5% bis 20% und vorzugsweise um 7% bis 17% größer sein als eine minimale Höhe in einem der beiden Eckbereiche.

Bei einem Ausführungsbeispiel ist der Abstand der Längsseitenwände des fließgepressten Behälters in der Mitte zwischen den Eckbereichen um mindestens 5% bis 10% größer als der Abstand an den Eckbereichen. Entsprechend ist in der Form zum Fließpressen der Abstand der beiden sich in Längsrichtung erstreckenden Innenwände in der Mitte zwischen den Eckbereichen um mindestens 5% bis 10% größer als an den Eckbereichen der Form.

Bei einem bevorzugten Ausführungsbeispiel hat der Boden des fließgepressten Behälters eine Dicke, die einer vorgegebenen Solldicke für den Batteriezellenbehälter entspricht. Somit sind weitere Umformungen des Bodens im Anschluss an das Fließpressen nicht erforderlich. Die Dicke des Bodens ist dabei vorzugsweise kleiner als die Wandstärke der Seitenwände, also der Längsseitenwände und der Breitenseitenwände, des fließgepressten Behälters.

Ein Sollwert für die Wandstärke der Seitenwände des fließgepressten Behälters kann in einem Bereich von 0,5 mm bis 1,5 mm und bevorzugt von 0,7 mm bis 1,1 mm liegen, einschließlich der jeweiligen Bereichsgrenzen. Dadurch kann die Wandstärke der Seitenwände durch das Abstreckgleitziehen in einem einzigen Abstreckvorgang mittels eines einzigen Matrizenwerkzeugs bereits im Wesentlichen auf die Sollstärke reduziert werden. Die Anzahl der nachfolgenden Bearbeitungsschritte lässt sich dadurch minimieren. Um ein Abstreckgleitziehen zu ermöglichen ist es vorteilhaft, wenn die Wandstärke der Seitenwände des fließgepressten Behälters maximal um 0,3 mm und insbesondere max. um 0,1 mm von dem vorgegebenen Sollwert des fertig hergestellten Batteriezellenbehälters abweicht.

Es ist außerdem bevorzugt, wenn der fließgepresste Behälter vor dem ersten Abstreckgleitziehen mit einem Ziehöl oder einem anderen Schmierstoff versehen wird. Der Schmierstoff wird zumindest an der Außenseite der Seitenwände des fließgepressten Behälters aufgebracht, da beim Abstreckgleitziehen dort die Umformarbeit in Kontakt mit dem Matrizenwerkzeug stattfindet. Durch den Schmierstoff wird die Reibung gezielt beeinflusst.

Bei einer vorteilhaften Ausführungsform des Verfahrens wird beim ersten Abstreckgleitziehen und/oder beim zweiten Abstreckgleitziehen eine Auflagestufe mit einem vorgegebenen Höhenabstand zum Boden in den Seitenwänden des abgestreckten Behälters bzw. des Zwischenbehälters gebildet. Die Auflagestufe dient als Auflagefläche für einen Deckel, mittels dem der einseitig offene Batteriezellenbehälter nach dem Einfüllen des Kernmaterials, beispielsweise eines Wickels, verschlossen werden kann.

Vorzugsweise weist der erste Abstreckstößel und/oder der zweite Abstreckstößel zur Bildung der Auflagestufe einen Vorsprung auf, der unter dem vorgegebenen Höhenabstand entfernt von der jeweiligen Stirnfläche des betreffenden Abstreckstößels angeordnet ist. Der Vorsprung ist insbesondere ringsumlaufend an dem Abstreckstößel vorhanden und ragt in einer Ebene weg, die rechtwinklig zur Arbeitsrichtung und zur Rückzugsrichtung ausgerichtet ist. Es ist außerdem vorteilhaft, wenn die Wandstärke der Seitenwände des fließgepressten Behälters beim ersten Abstreckgleitziehen in einem Bereich von etwa 5% bis etwa 30% und vorzugsweise von etwa 10% bis 20% verringert wird. Dadurch lässt sich bereits beim ersten Abstreckgleitziehen in etwa die Sollstärke der Seitenwände erreichen.

Es ist insbesondere bevorzugt, wenn die Wandstärke der Seitenwände des abgestreckten Behälters beim zweiten Abstreckgleitziehen um weniger als 1% reduziert wird. Der Innendurchmesser des Matrizenwerkzeugs in der zweiten Abstreckstation kann gleich groß sein wie oder kleiner sein als der Innendurchmesser des Matrizenwerkzeugs in der ersten Abstreckstation. Aufgrund von Elastizitäten des Materials weitet sich der abgestreckte Behälter nach dem Herausziehen aus dem ersten Matrizenwerkzeug wieder etwas auf. Er erhält dann durch das zweite Abstreckgleitziehen in der zweiten Abstreckstation seine endgültige Form.

Die Wandstärke der Seitenwände des hergestellten Batteriezellenbehälters weichen durch das vorstehend beschriebene Verfahren max. um 0,1 mm und bevorzugt max. um 0,05 mm und weiter bevorzugt um max. 0,01 mm von einem vorgegebenen Sollwert des fertig hergestellten Batteriezellenbehälters ab.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele der Erfindung anhand der Zeichnungen im Einzelnen erläutert. Es zeigen:
Figur 1a einen Butzen gemäß dem Stand der Technik,
Figuren 1b und 1c jeweils eine schematische perspektivische Darstellung eines Ausführungsbeispiels eines Butzens,
Figur 2 eine schematische Darstellung einer Pressstation zum Fließpressen in einem Längsschnitt,
Figur 3 die Fließpressstation aus Figur 2 in einer Draufsicht auf die Pressform gemäß Schnittlinie III-III in Figur 2,
Figuren 4a und 4b jeweils eine schematische Seitenansicht eines fließgepressten Behälters,
Figur 5 eine schematische Draufsicht auf den fließgepressten Behälter in Figur 4a gemäß Pfeil V,
Figuren 6-10 jeweils eine schematische Darstellung einer ersten Abstreckstation in unterschiedlichen Stadien bei einem ersten Abstreckgleitziehen des fließgepressten Behälters,
Figur 11 eine schematische Darstellung des Transfers des in der ersten Abstreckstation abgestreckten Behälters zu einer zweiten Abstreckstation,
Figur 12 eine schematische Darstellung einer zweiten Abstreckstation,
Figur 13 eine schematische Darstellung einer Trennstation zum Abtrennen eines oberen Randes des aus der zweiten Abstreckstation gelieferten Zwischenbehälters,
Figur 14 eine Querschnittsdarstellung durch den hergestellten prismatischen, einseitig offenen Batteriezellenbehälter,
Figur 15 eine schematische perspektivische Darstellung des hergestellten Batteriezellenbehälters,
Figur 16 eine schematische, Blockschaltbild ähnliche Darstellung einer Vorrichtung zur Herstellung des Batteriezellenbehälters und
Figur 17 eine schematische Teildarstellung einer bevorzugten Ausführung eines Abstreckrings.

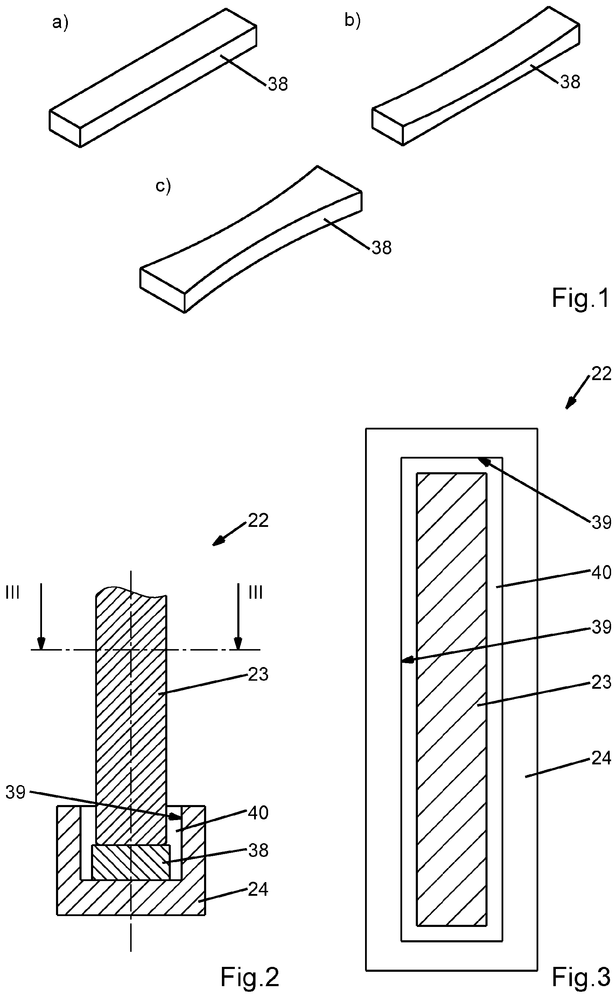

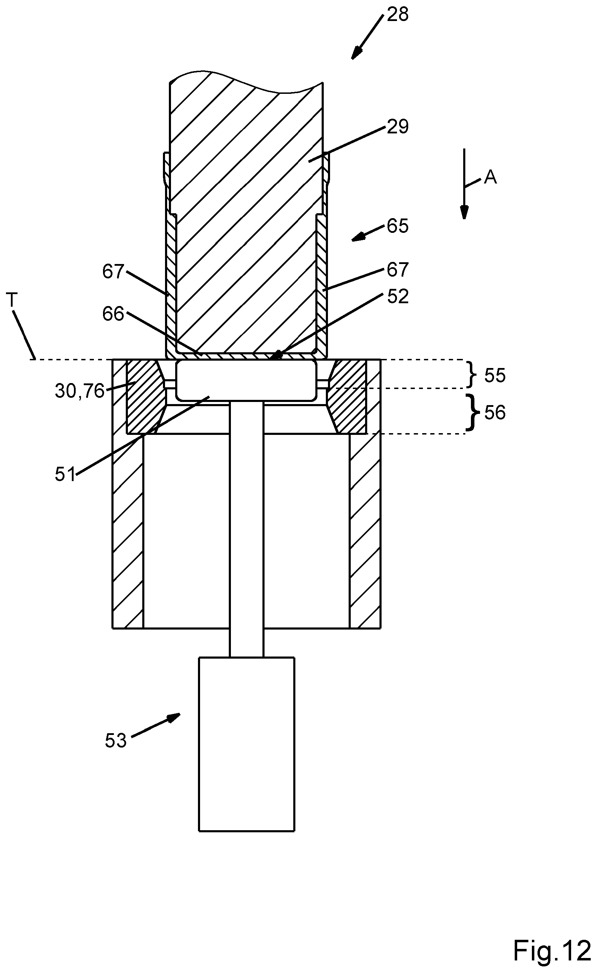

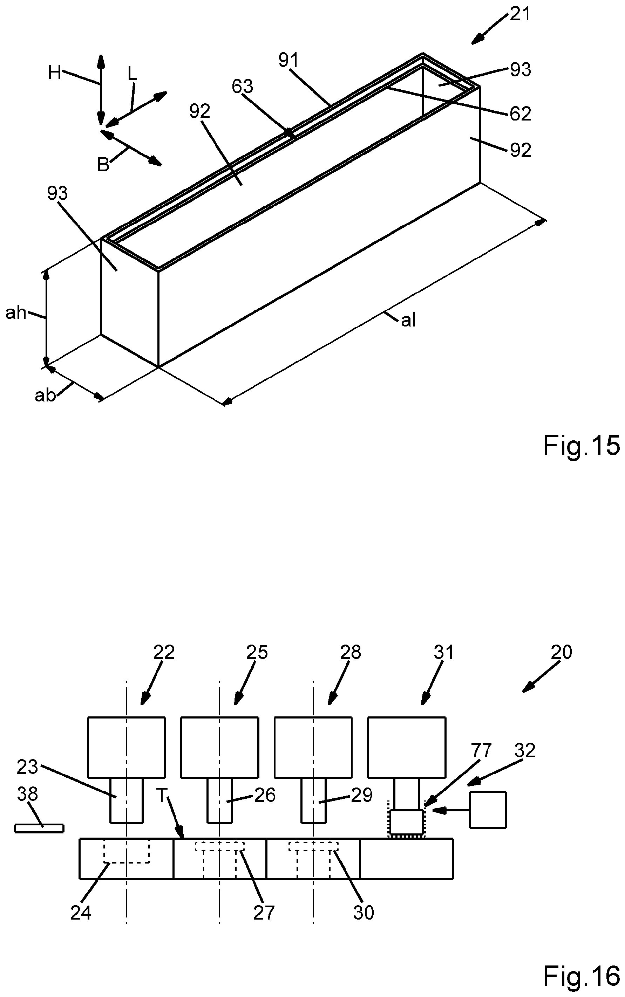

In Figur 16 ist stark schematisiert ein Ausführungsbeispiel einer Vorrichtung 20 veranschaulicht, die zur Herstellung eines einseitig offenen, prismatischen und beispielsgemäß quaderförmigen Batteriezellenbehälters 21 eingerichtet ist. Die Vorrichtung 20 weist beim Ausführungsbeispiel eine Fließpressstation 22 mit einem Pressstempel 23 und einer Pressform 24, eine erste Abstreckstation 25 mit einem ersten Abstreckstößel 26 und einem ersten Matrizenwerkzeug 27, eine zweite Abstreckstation 28 mit einem zweiten Abstreckstößel 29 und einem zweiten Matrizenwerkzeug 30 sowie eine Trennstation 31 mit einer Trenneinrichtung 32 auf. Einzelheiten der Vorrichtung 20 werden im Zusammenhang mit den Figuren 1-15 und der Erläuterung des Verfahrens erläutert.

Die Herstellung des Batteriezellenbehälters 21 erfolgt schrittweise zunächst durch ein Fließpressen eines Butzens 38 in der Fließpressstation 22. Ein aus dem Stand der Technik bekannter Butzen 38 hat (Figur 1a) eine quaderförmige Gestalt. Eine Länge des Butzens 38 ist gegenüber einer Breite des Butzens um einen Faktor von mindestens 4-5 oder mindestens 7 größer. Die Form des Butzens 38 ist angenähert an die Pressform 24 angepasst, in die der Butzen 38 zum Fließpressen eingelegt wird.

In den Figuren 1b und 1c sind gemäß der Erfindung abweichende Konturen des Butzens 38 veranschaulicht. Im Bereich der kurzen Seite (Breite des Butzens) wird bei einem anschließenden Fließpressen zur Umformung des Butzens 38 in einen fließgepressten Behälter mehr Material benötigt als in einem mittleren Bereich der längeren Seiten des Butzens 38. Der Butzen 38 hat deswegen in den beiden Längsendbereichen im Anschluss an die kurzen Seiten eine größere Querschnittsfläche als in einem mittleren Bereich zwischen den beiden Längsendbereichen.

Um dies zu erreichen, kann bei einem Beispiel die Dicke des Butzens variieren und in Richtung zu den kürzeren Seiten ausgehend von einem mittleren Bereich jeweils zunehmen (Figur 1b). Alternativ oder zusätzlich kann die Breite des Butzens 38 variieren und in einem in seiner Längsrichtung mittleren Bereich am geringsten sein und ausgehend davon zu den beiden kurzen Seiten hinzunehmen, wie es schematisch in Figur 1c gezeigt ist. Diese Ausführungsform hat in Draufsicht auf die obere Seite oder die untere Seite des Butzens 38 die Gestalt ähnlich einer Sanduhr oder eines Knochens. Dabei sind die beiden schmalen, sich in Längsrichtung erstreckenden Seiten beispielsweise konkav nach innen aufeinander zu gewölbt, so dass der Butzen 38 eine taillierte Gestalt hat.

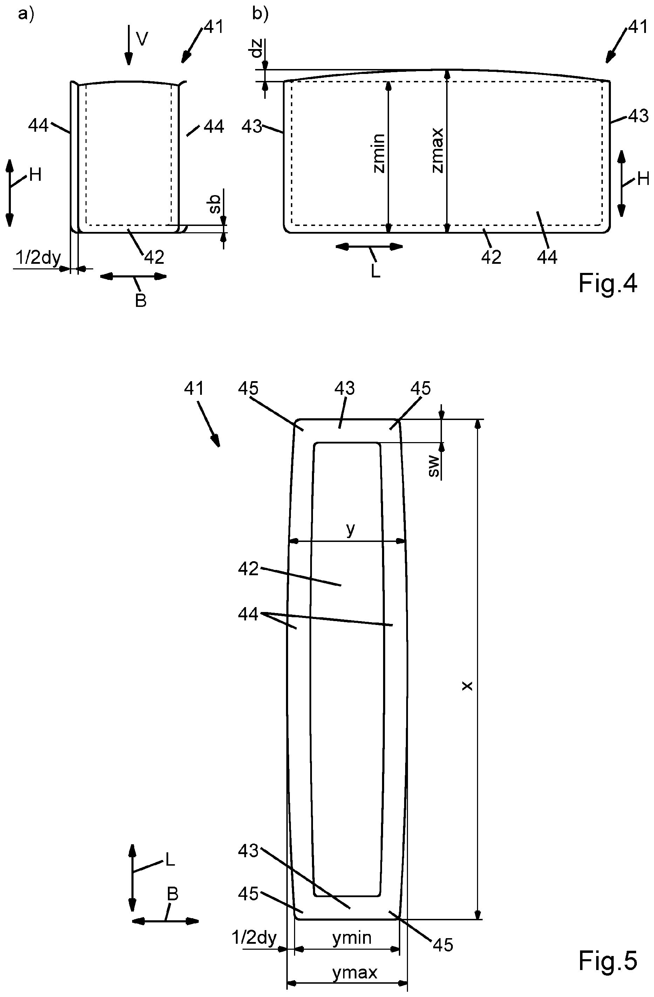

Erfindungsgemäß erfolgt das Massivumformen des Butzens 38 zur Herstellung des fließgepressten Behälters 41 durch ein sogenanntes Rückwärtsfließpressen. Dabei wird zunächst der Butzen in die Pressform 24 eingelegt. Anschließend wird Pressstempel 23 in die Pressform 24 eingeführt, wobei zwischen dem Pressstempel 23 und den Innenwänden 39 der Pressform 24 ein ringsumlaufender Spalt 40 verbleibt. In diesen Spalt 40 fließt das Material, wenn der Pressstempel 23 den Butzen 38 gegen den Boden der Pressform 24 presst und den Butzen 38 dabei umformt. Dabei entsteht ein fließgepresster Behälter 41 (Figuren 4 und 5).

Der fließgepresste Behälter 41 hat einen Boden 42 und vier Seitenwände 43, 44, die sich an einer jeweiligen Seite des Bodens 42 anschließen und somit einen einseitig offenen integral ausgebildeten fließgepressten Behälter 41 bilden. Der fließgepresste Behälter 41 hat zwei Breitenseitenwände 43, die sich in einer Breitenrichtung B und zwei Längsseitenwände 44, die sich in einer Längsrichtung L erstrecken. Die Längsrichtung L und die Breitenrichtung B sind rechtwinklig zueinander ausgerichtet und spannen eine Ebene auf, die parallel zu dem Boden 42 ausgerichtet ist. Eine Abmessung des fließgepressten Behälters 41 in Längsrichtung L entspricht einer Länge x und einer Abmessung in Breitenrichtung B des fließgepressten Behälters 41 entspricht einer Breite y.

Die Breite y ist beispielsgemäß nicht konstant. An den beispielsgemäß vier Eckbereichen 45 hat der fließgepresste Behälter 41 eine minimale Breite ymin und in Längsrichtung L zwischen zwei benachbarten Eckbereichen 45, die durch eine der Längsseitenwände 44 verbunden sind, hat der fließgepresste Behälter 41 eine maximale Breite ymax. Die maximale Breite ymax ist vorzugsweise in der Mitte des fließgepressten Behälters 41 in Längsrichtung L vorhanden. Die unterschiedliche Breite y ergibt sich durch eine nach außen gewölbte Form der Längsseitenwände 44, deren Abstand von den Eckbereichen 45 bis zur Mitte des fließgepressten Behälters 41 in Längsrichtung L zunimmt und ausgehend von dort zu den Eckbereichen 45 abnimmt. Von außen auf einer Längsseitenwand 44 des fließgepressten Behälters 41 gesehen hat diese eine konvexe Wölbung entlang ihrer Erstreckung in Längsrichtung L. Eine Differenz dy zwischen der maximalen Breite ymax und der minimalen Breite ymin ist somit durch die sich voneinander weg wölbenden Längsseitenflächen 44 erreicht. Die maximale Breite ymax ist bevorzugt um mindestens 5% bis 10% größer als die minimale Breite ymin.

Die oberen Kanten der Seitenwände 43, 44 des fließgepressten Behälters 41 können einen gekrümmten Verlauf aufweisen (Figuren 4a, 4b). Eine Höhe z der Seitenwände 43, 44 des fließgepressten Behälters 41 ist somit nicht konstant, sondern variiert. Eine maximale Höhe zmax kann beispielsweise in einem mittleren Bereich einer Seitenwand 34, 44 erreicht werden und eine minimalen Höhe zmin kann in einem der beiden an die betreffende Seitenwand 43, 44 angrenzenden Eckbereiche 45 vorliegen. Die maximale Höhe kann 5% bis 20% oder insbesondere 7% bis 17% größer sein als die minimale Höhe zmin, wodurch sich eine Differenz dz in der Höhe z ergibt (Figur 4b). Diese Höhendifferenz gilt zumindest für die längeren der Seitenwände, also hier die Längsseitenwände 44.

Die Dicke oder Stärke sb des Bodens 42 des fließgepressten Behälters 41 entspricht im Wesentlichen den Sollwert der Stärke des Bodens des Batteriezellenbehälters 21. In den weiteren Umformschritten des fließgepressten Behälters 41 wird die Stärke sb des Bodens nicht wesentlich verändert. Die Stärke sb des Bodens 42 ist betragsmäßig kleiner als die Wandstärke sw der Seitenwände 43, 44 des fließgepressten Behälters 41. Die Wandstärke sw der Seitenwände 43, 44 kann in etwa in einem Bereich von 0,5 mm bis 1,5 mm und vorzugsweise von 0,7 mm bis 1,1 mm liegen, einschließlich der jeweiligen Bereichsgrenzen. Die Abweichung vom Sollwert der Wandstärke sw beträgt vorzugsweise höchsten 0,3 mm und weiter vorzugsweise höchstens 0,1 mm. Dadurch wird das nachfolgende Abstreckgleitziehen des fließgepressten Behälters 41 und das Positionieren des fließgepressten Behälters 41 auf dem ersten Abstreckstößel 26 vereinfacht.

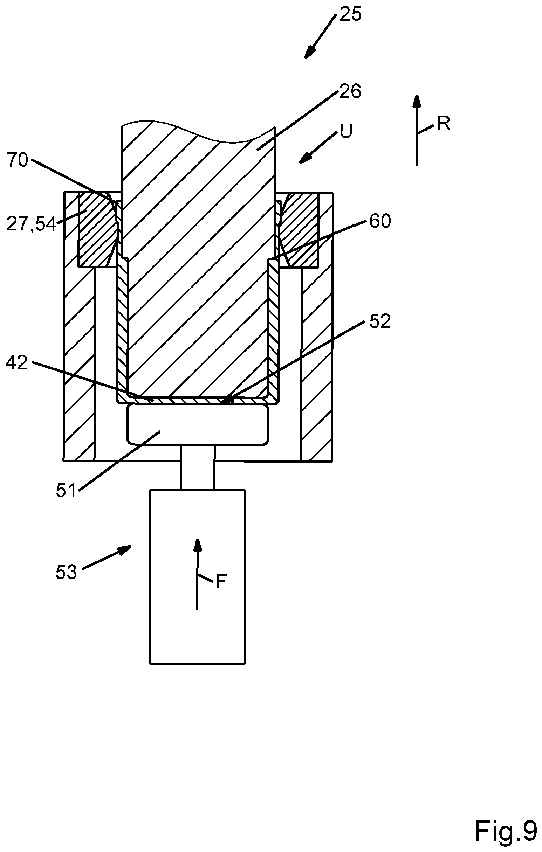

Der fließgepresste Behälter 41 wird von der Fließpressstation 22 in die erste Abstreckstation 25 transportiert, vorzugsweise entlang einer Transportebene T. In der ersten Abstreckstation 25 wird der fließgepresste Behälter 41 fluchtend zum ersten Abstreckstößel 26 positioniert. Der fließgepresste Behälter 41 kann auf einem Gegenhalter 51 unterhalb des ersten Abstreckstößels 26 positioniert werden. Der erste Abstreckstößel 26 ist aus einer Rückzugslage in einer Arbeitsrichtung A auf das erste Matrizenwerkzeug 27 zu bewegbar, bis er eine Umkehrposition U erreicht hat (Figur 9). Ausgehend von dieser Umkehrposition U kann der erste Abstreckstößel 26 in einer Rückzugsrichtung R, die der Arbeitsrichtung A entgegengerichtet ist, in die Rückzugstellung zurückbewegt werden. Der erste Abstreckstößel 26 führt bei seiner Bewegung in Arbeitsrichtung A bzw. in Rückzugsrichtung R eine lineare Bewegung entlang seiner Längsachse durch.

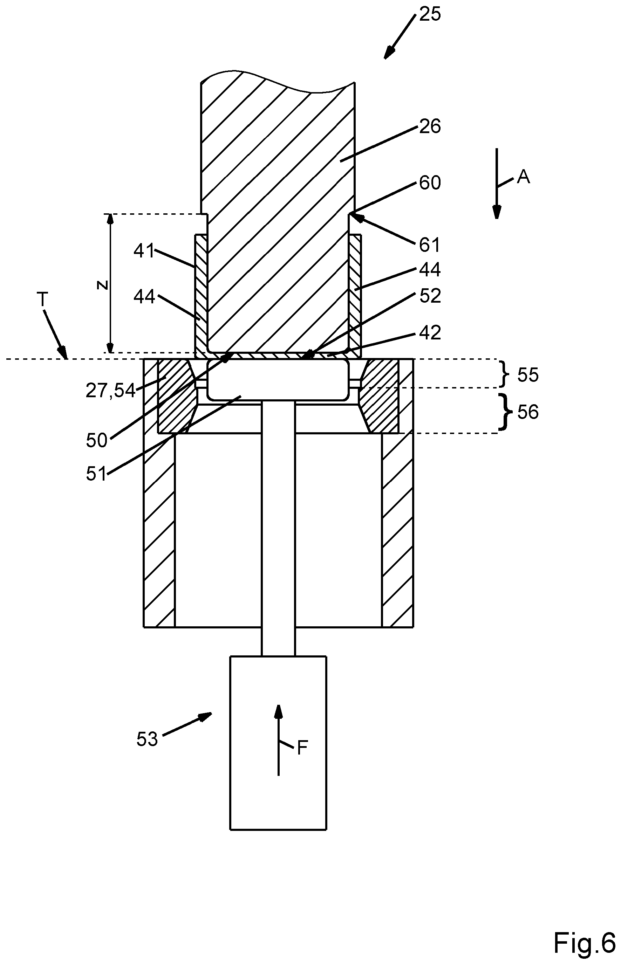

Der erste Abstreckstößel 26 hat im Querschnitt eine rechteckige Gestalt, die der inneren Form des herzustellenden Batteriezellenbehälters 21 entspricht. Der erste Abstreckstößel 26 hat eine Stirnfläche 50, die rechtwinklig zur Arbeitsrichtung A ausgerichtet ist. Nach dem Beginn der Bewegung des ersten Abstreckstößels 26 in Arbeitsrichtung A ausgehend von seiner nicht dargestellten Rückzugsstellung, greift der erste Abstreckstößel 26 in den fließgepressten Behälter 41 ein, bis seine Stirnfläche 50 in Kontakt mit dem Boden 42 des fließgepressten Behälters 41 steht (Figur 6). Der fließgepresste Behälter 41 wird dabei durch einen Gegenhalter 51 abgestützt. Der Gegenhalter 51 hat eine Stützfläche 52, auf der die Unterseite des Bodens 42 des fließgepressten Behälters 41 aufliegt. Der Gegenhalter 51 ist in Rückzugsrichtung R und mithin entgegen der Arbeitsrichtung A mittels einer Vorspanneinrichtung 53 mit einer Vorspannkraft F vorgespannt. Bei der Vorspanneinrichtung 53 kann es sich beispielsweise um eine Federeinrichtung und insbesondere eine Gasfedereinrichtung handeln. Der Gegenhalter 51 kann durch die Bewegung des ersten Abstreckstößels 26 entgegen der Vorspannkraft F in Arbeitsrichtung A bewegt werden. Die Vorspannkraft F ist ausreichend groß, um das Eingreifen des ersten Abstreckstößels 26 in den fließgepressten Behälter 41 abzustützen und den Boden 42 beim Umformen zwischen der Stirnseite 50 und der Stützfläche 52 zu klemmen, so dass beim Umformen bzw. Abstreckgleitziehen des fließgepressten Behälters 41 eine ungewollte Umformung des Bodens 42 vermieden wird. Während des ersten Abstreckgleitziehens in der ersten Abstreckstation 25 steht die Stützfläche 52 stets in Kontakt mit dem Boden 42.

Das erste Matrizenwerkzeug 27 ist durch einen oder mehrere Abstreckringe 54 gebildet. Beim Ausführungsbeispiel werden im Zusammenwirken mit dem ersten Abstreckstößel 26 mittels des ersten Matrizenwerkzeugs 27 zwei Arbeitsschritte bzw. Umformschritte bewirkt. Die beiden Umformschritte können durch zwei separate Abstreckringe 54 oder einen gemeinsamen Abstreckring 54 mit einem ersten Ringabschnitt 55 und einem zweiten Ringabschnitt 56 bewirkt werden. Bei dem hier gezeigten bevorzugten Ausführungsbeispiel ist der Abstreckring 54 in Arbeitsrichtung A in einen ersten Ringabschnitt 55 und einen sich unmittelbar anschließenden zweiten Ringabschnitt 56 unterteilt. Der Abstreckring 54 ist integral aus einem einheitlichen Material ausgeführt. Es könnten auch zwei separate Abstreckringe bzw. zwei voneinander getrennte Ringabschnitte 55, 56 aus unterschiedlichen Materialien verwendet werden.

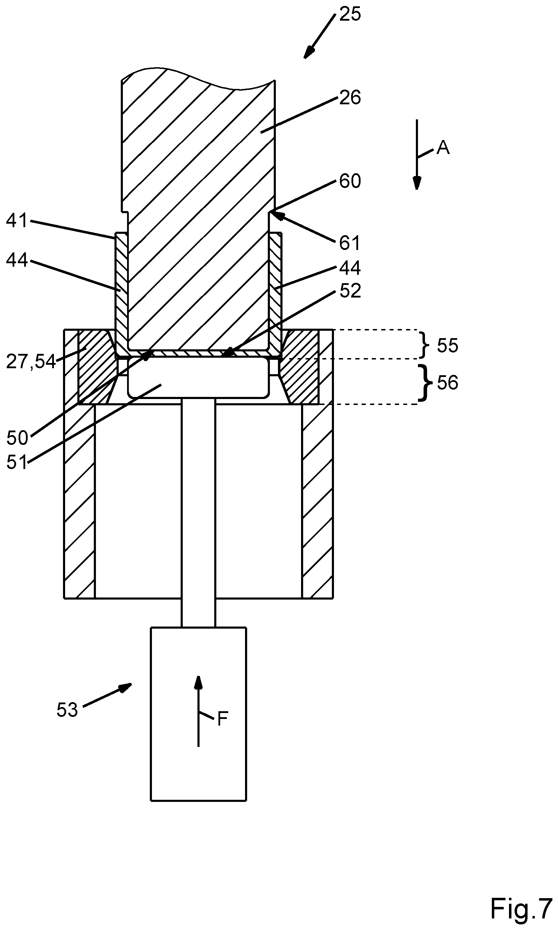

Der erste Ringabschnitt 55 hat einen Innendurchmesser, der größer ist als der Innendurchmesser des zweiten Ringabschnitts 56. Wenn der fließgepresste Behälter 41 durch die Bewegung des ersten Abstreckstößels 26 in Arbeitsrichtung A in den ersten Abstreckring 54 bzw. den ersten Ringabschnitt 55 hineinbewegt wird, erfolgt ein erstes Umformen der Seitenwände 43, 44, wodurch eine Fixierung des fließgepressten Behälters 41 am ersten Abstreckstößel 26 erreicht wird. Der Umformgrad, der mittels des ersten Ringabschnitts 55 erreicht wird, ist gering und insbesondere geringer als der Umformgrad durch den anschließenden zweiten Ringabschnitt 66. Dieser Arbeitsschritt der Fixierung ist schematisch in Figur 7 gezeigt.

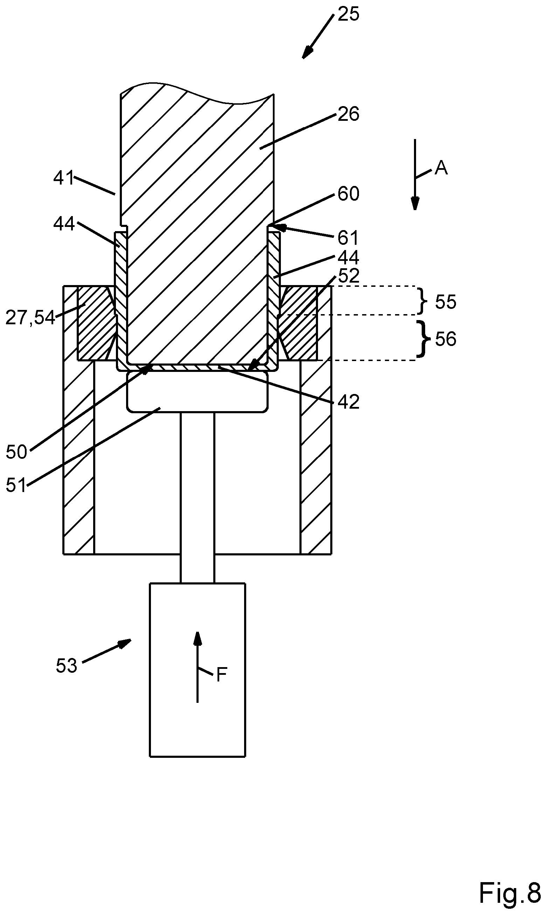

Durch eine fortgesetzte Bewegung in Arbeitsrichtung A des ersten Abstreckstößels 26 wird der fließgepresste Behälter 41 durch den zweiten Ringabschnitt 56 bewegt, wobei die eigentliche Umformung der Seitenwände 43, 44 erfolgt (Figur 8). Die Wandstärke sw der Seitenwände 43, 44 nimmt ab, während die Höhe der Seitenwände 43, 44 in einer Höhenrichtung H, die rechtwinklig zur Längsrichtung L und zur Breitenrichtung B ausgerichtet ist, zunimmt. Die Höhenrichtung H ist parallel zur Arbeitsrichtung A bzw. zur Rückzugsrichtung R ausgerichtet.

Der Querschnitt des ersten Abstreckstößels 26 ist beispielsgemäß nicht konstant. Mit Abstand zur Stirnfläche 50 hat der erste Abstreckstößel 26 einen ringsumlaufenden Vorsprung 60. Der Vorsprung 60 bildet sozusagen eine ringförmig geschlossene Stufe mit einer Vorsprungsfläche 61, die sich beim Ausführungsbeispiel in einer Ebene erstreckt, die rechtwinklig zur Arbeitsrichtung A ausgerichtet ist. Die Vorsprungsfläche 61 hat einen Normalenvektor, der beispielsgemäß parallel zur Arbeitsrichtung A verläuft. In der Rückzugsstellung des ersten Abstreckstößels 26 ist die Vorsprungsfläche 61 dem ersten Matrizenwerkzeug 27 zugewandt.

In Abwandlung zum bevorzugten Ausführungsbeispiel kann die Vorsprungsfläche 61 auch unter einem Winkel ungleich 90 Grad gegenüber der Arbeitsrichtung A ausgerichtet sein.

Durch den Vorsprung 60 nimmt die Querschnittsfläche in Richtung von der Stirnfläche 50 des ersten Abstreckstößels 26 zu. Der Abstand zwischen dem Vorsprung 60 und der Stirnfläche 50 entspricht bzw. definiert einen Höhenabstand z.

Wird nun durch die weitere Umformung der Seitenwände 43, 44 die Höhe dieser Seitenwände vergrößert, fließt das Material entlang des ersten Abstreckstößels 26 über den Vorsprung 60 hinweg. Der Materialfluss über den Vorsprung 60 ist schematisch in Figur 9 zu erkennen. Dort hat der erste Abstreckstößel 26 seine Umkehrposition U erreicht und kehrt seine Bewegungsrichtung von einer Bewegung in Arbeitsrichtung A in eine entgegengesetzte Bewegung in Rückzugsrichtung R um. Dabei ist zu erkennen, dass der Behälter nicht vollständig durch das erste Matrizenwerkzeug 27 hindurchbewegt wurde.

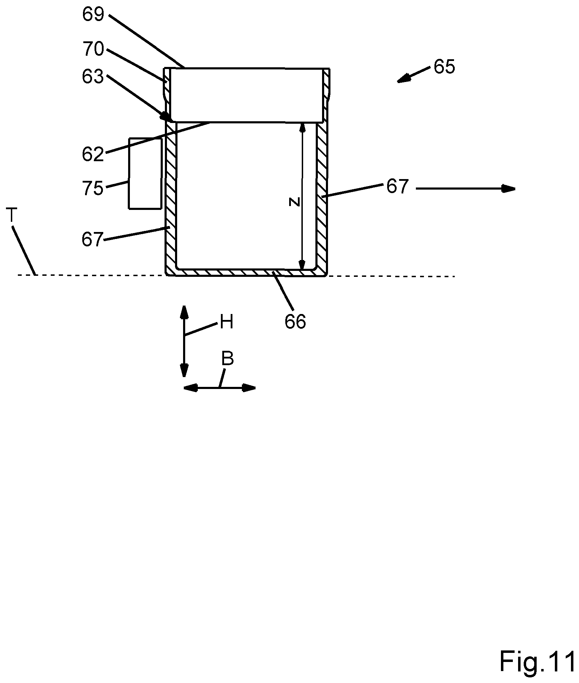

Aufgrund des Materialflusses über den Vorsprung 60 ist an den Seitenwänden eine Auflagestufe 62 gebildet (vergleiche Figuren 11 und 13-15). Die Auflagestufe 62 stellt eine Auflagefläche 63 für einen Deckel bereit, der benachbart zur Öffnung des Batteriezellenbehälters 21 in den Batteriezellenbehälter 21 eingesetzt und auf die Auflagefläche 63 aufgelegt werden kann. Mit Hilfe eines solchen Deckels wird der Batteriezellenbehälter 21 nach dem Einbringen des Kernmaterials geschlossen.

Die Ausrichtung der Auflagefläche 63 entspricht der Ausrichtung der Vorsprungsfläche 61. Beispielsgemäß ist die Auflagefläche 63 rechtwinklig zur Höhenrichtung H des Batteriezellenbehälters 21 ausgerichtet.

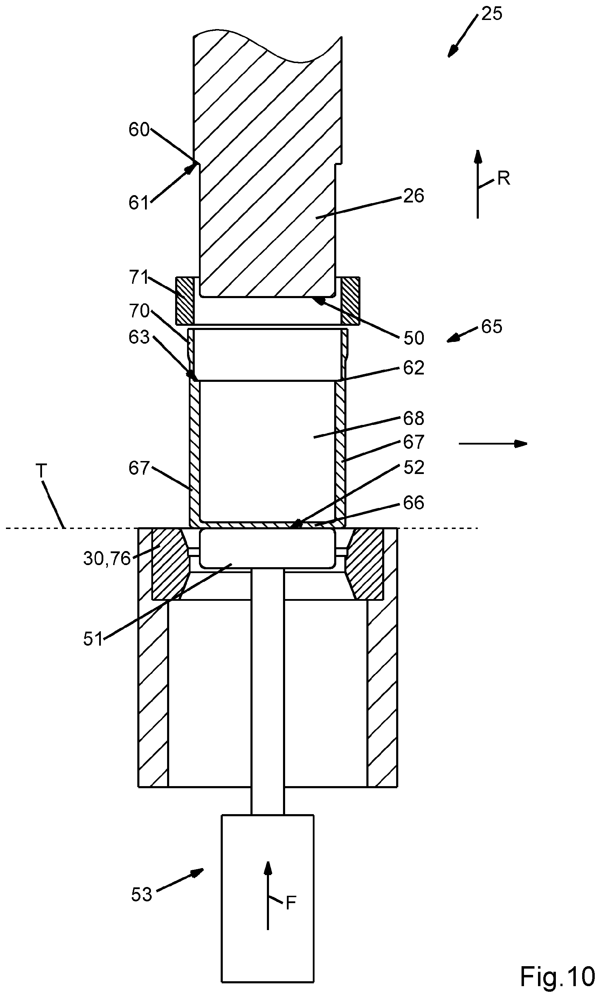

In der ersten Abstreckstation 25 wird durch das erste Abstreckgleitziehen aus dem fließgepressten Behälter 41 umgeformte abgestreckte Behälter 65 erhalten. Eine Abstreifeinrichtung 71 ist vorhanden, die den abgestreckten Behälter 65 während der Bewegung des ersten Abstreckstößels 26 in Rückzugsrichtung R vom ersten Abstreckstößel 26 abstreift (Figur 10). Die Abstreifeinrichtung 71 kann beispielsweise durch einen Abstreifring gebildet sein, der koaxial zum ersten Abstreckstößel 26 angeordnet ist. Die erste Abstreifeinrichtung 71 befindet sich in Rückzugsrichtung R betrachtet mit Abstand zum ersten Matrizenwerkzeug 27 bzw. zur Transportebene T. Nach dem Abstreifen befindet sich der abgestreifte, abgestreckte Behälter 65 auf der Stützfläche 52 des Gegenhalters 51, die dann in etwa in der Transportebene T positioniert ist. Dies entspricht auf der Ausgangsstellung des Gegenhalters 51.

Der abgestreckte Behälter 65 ist schematisch in den Figuren 10 und 11 veranschaulicht. Er weist einen Boden 66 auf, der im Wesentlichen dem Boden 42 des fließgepressten Behälters 41 entspricht. Der abgestreckte Behälter 65 hat vier Seitenwände, nämlich zwei Längsseitenwände 67 und zwei Breitenseitenwände 68, von denen im Querschnitt in den Figuren 10 und 11 lediglich eine zu erkennen ist. Die Seitenwände 67, 68 haben im Anschluss an die dem Boden 66 entgegengesetzte Öffnung 69 einen randseitigen Abschnitt 70, der nicht oder nicht vollständig durch das erste Matrizenwerkzeug 27 bewegt wurde. Der randseitige Abschnitt 70 umschließt die Öffnung 69 in Umfangsrichtung vollständig und bildet ein Ende der Seitenwände 67, 68, das eine größere Wandstärke aufweist, die in etwa der Wandstärke sw des fließgepressten Behälters 41 entspricht. Demgegenüber ist die Wandstärke der Seitenwände 67, 68 des abgestreckten Behälters 65 um etwa 20% bis 30% geringer als die Wandstärke sw des fließgepressten Behälters 41. Aufgrund der Querschnittszunahme des ersten Abstreckstößels 26 im Anschluss an den Vorsprung 60 ist die Wandstärke des abgestreckten Behälters 65 in Höhenrichtung H zur Öffnung 69 hin zwischen der Auflagestufe 62 und dem randseitigen Abschnitt 70 weiter verringert, wobei die Wandstärke hier demnach gegenüber der Wandstärke sw des fließgepressten Behälters um mehr als 20% bis 30% verringert ist.

Mittels einer lediglich stark schematisiert veranschaulichten Transfereinrichtung 75 wird der abgestreckte Behälter 65 entlang der Transportebene T in die zweite Abstreckstation 28 bewegt (Figur 11). Eine solche Transfereinrichtung 75 kann auch für den Transport von der Fließpressstation 22 in die erste Abstreckstation 25 verwendet werden.

Der abgestreckte Behälter 65 hat bereits im Wesentlichen die Wandstärken, die Bodenstärke sowie die Abmessungen in Breitenrichtung B und in Längsrichtung L, die dem herzustellenden Batteriezellenbehälter 21 entsprechen. In der zweiten Abstreckstation 28 findet somit lediglich nur eine geringe Umformung durch das zweite Abstreckgleitziehen des abgestreckten Behälters 65 statt. Die Wandstärke der Seitenwände 67, 68 wird in der zweiten Abstreckstation 28 beim zweiten Abstreckgleitziehen um maximal 1% verringert.

Die zweite Abstreckstation 28 ist im Wesentlichen identisch zur ersten Abstreckstation 25 aufgebaut, so dass auf die vorstehende Beschreibung verwiesen werden kann. Der einzige Unterschied besteht darin, dass das zweite Matrizenwerkzeug 30 durch einen zweiten Abstreckring 76 gebildet ist, dessen Abmessungen bzw. Konturen sich vom ersten Abstreckring 54 unterscheiden können. Der zweite Abstreckring 76 ist beispielsgemäß analog zum ersten Abstreckring 54 in einen ersten Ringabschnitt 55 und einen zweiten Ringabschnitt 56 unterteilt. Der Durchmesserunterschied des Innendurchmessers des ersten Ringabschnitts 55 vom zweiten Ringabschnitt 56 ist beim zweiten Abstreckring 76 geringer als beim ersten Abstreckring 54. Der Innendurchmesser des zweiten Ringabschnitts 56 des zweiten Abstreckrings 76 kann dem Innendurchmesser des zweiten Ringabschnitts 56 des ersten Abstreckring 54 entsprechen. Auch wenn diese Innendurchmesser gleich groß sind, wird in der zweiten Abstreckstation 28 beim zweiten Abstreckgleitziehen eine Umformarbeit verrichtet, da durch elastische Auffederung des Materials des abgestreckten Behälters 65 nach dem ersten Abstreckgleitziehen eine Zunahme der Außenabmessungen des abgestreckten Behälters 65 erfolgt, die beim zweiten Abstreckgleitziehen in der zweiten Abstreckstation 28 zumindest teilweise wieder rückgängig gemacht wird.

Der Umformgrad in der zweiten Abstreckstation 28 ist gering. Vorzugsweise werden die Wandstärken der Seitenwände 67, 68 des abgestreckten Behälters 65 maximal um 1% verringert. Das zweite Abstreckgleitziehen dient zum Kalibrieren. Die Konturen, insbesondere in den Eckbereichen des abgestreckten Behälters 65, werden angepasst und ggfs. verbleibende, zu große Krümmungsradien in den Eckbereichen verringert.

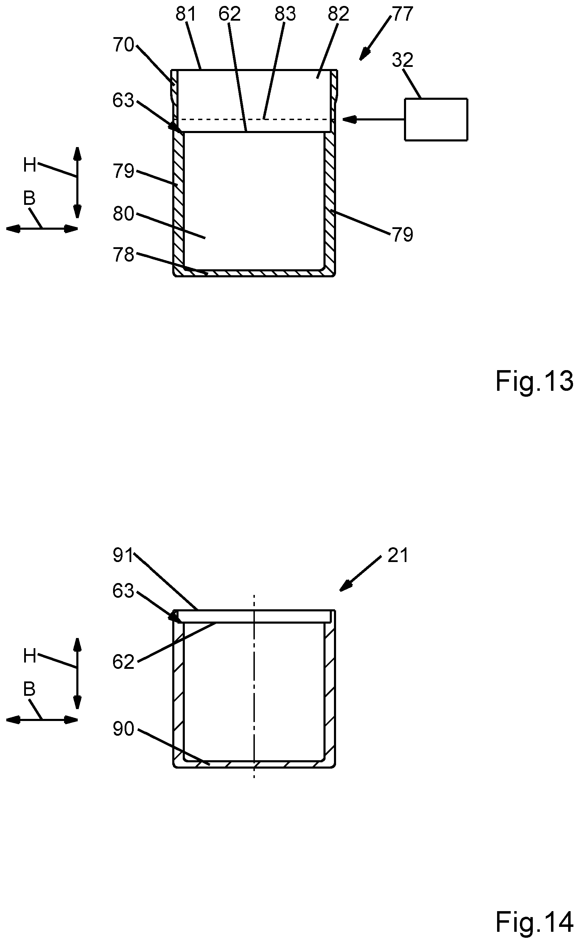

Der Ablauf des zweiten Abstreckgleitziehens in der zweiten Abstreckstation 28 entspricht dem des ersten Abstreckgleitziehens in der ersten Abstreckstation 25, so dass auf die vorstehende Beschreibung verwiesen wird. Es wird an dieser Stelle explizit darauf hingewiesen, dass beim Ausführungsbeispiel auch beim zweiten Abstreckgleitziehen der abgestreckte Behälter 65 nicht vollständig in Arbeitsrichtung A durch das zweite Matrizenwerkzeug 30 bewegt wird, sondern vorher an einem entsprechenden Umkehrpunkt entgegen der Arbeitsrichtung A in der Rückzugsrichtung R wieder zurückbewegt wird, wie dies auch im Zusammenhang mit dem ersten Abstreckgleitziehen beschrieben wurde. Nach dem zweiten Abstreckgleitziehen ist der abgestreckte Behälter 65 in einen Zwischenbehälter 77 umgeformt. Der Zwischenbehälter 77 wird in der zweiten Abstreckstation 28 vom zweiten Abstreckstößel 29 mittels einer Abstreckeinrichtung abgestreift und befindet sich dann auf der Stützfläche 52 des Gegenhalters 51, wobei sich die Unterseite des Bodens in etwa in der Transportebene T befindet. Der Zwischenbehälter 77 ist in Figur 13 veranschaulicht. Da der Zwischenbehälter 77 beim Ausführungsbeispiel im Wesentlichen dem abgestreckten Behälter 65 entspricht, wird zur Beschreibung der Form auf die vorstehende Beschreibung des abgestreckten Behälters 65 verwiesen. Der Zwischenbehälter 77 hat somit einen Boden 78, von dem ausgehend sich zwei Längsseitenwände 79 und zwei Breitenseitenwände 80 weg erstrecken bis zu einer Öffnung 81 hin. Die Auflagestufe 62 mit der Auflagefläche 63 sowie der randseitige Abschnitt 70 sind beim Zwischenbehälter 77 noch vorhanden.

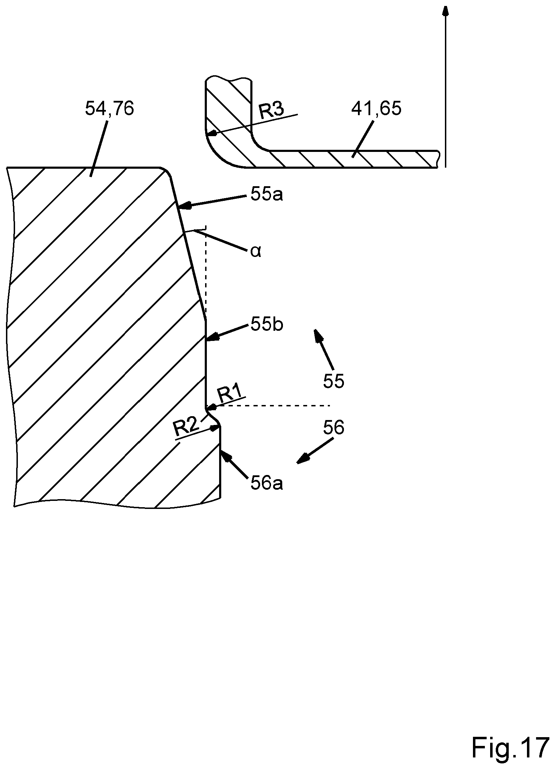

Figur 17 veranschaulicht einen Abschnitt des ersten Abstreckrings 54 bzw. des zweiten Abstreckrings 76 mit einer bevorzugten Ausgestaltung einer Innenfläche, die beim Abstreckgleitziehen im Kontakt mit dem umzuformenden fließgepressten Behälter 41 bzw. dem abgestreckten Behälter 65 gelangt. Auf der dem zweiten Ringabschnitt 56 entgegengesetzten oberen Seite hat der erste Ringabschnitt 55 eine konische Einführfläche 55a, die sich vom zweiten Ringabschnitt 56 weg erweitert. Der Neigungswinkel α gegenüber der Arbeitsrichtung A kann dabei 2 bis 5 Grad und beispielsgemäß 3 Grad betragen. An die Einführfläche 55a schließt sich eine Mantelfläche 55b des ersten Ringabschnitts 55 an, die parallel zur Arbeitsrichtung A ausgerichtet ist. Insbesondere der Bereich, der durch die Mantelfläche 55b begrenzt ist, dient zum Fixieren des umzuformenden Behälters 41 bzw. 65.

An die Mantelfläche 55b schließt sich der zweite Ringabschnitt 56 an. Der sich an die Zylindermantelfläche 55b anschließende Flächenabschnitt des zweiten Ringabschnitts 56 hat eine etwa S-förmige Querschnittskontur mit einem ersten Radius R1 und einem zweiten Radius R2. In Draufsicht auf die Innenfläche des Abstreckrings 54, 76 ist durch den ersten Radius R1 ein konkaver Flächenabschnitt und durch den zweiten Radius R2 ein konvexer Flächenabschnitt gebildet. Die beiden Radien R1, R2 haben an der Übergangsstelle zwischen dem konkaven und dem konvexen Flächenabschnitt eine gemeinsame Tangente, so dass der Übergang vom ersten Radius R1 in den zweiten Radius R2 bzw. vom konkaven zum konvexen Flächenabschnitt stufen- und kantenlos erfolgt.

Der Übergang vom ersten Radius R1 bzw. vom konkaven Flächenabschnitt zu der Mantelfläche 55b des ersten Ringabschnitts 55 ist bevorzugt tangential und somit stufen- und kantenlos.

Der erste Radius R1 ist vorzugsweise kleiner als der zweite Radius R2. Der erste Radius R1 ist vorzugsweise um den Faktor 2-6 kleiner als der zweite Radius R2. Beim Ausführungsbeispiel ist der erste Radius um den Faktor 4 kleiner als der zweite Radius R2.

Im Übergang vom Boden 42 zu einer betreffenden Seitenwand 43, 44 hat der umzuformende Behälter 41 bzw. 65 einen dritten Radius R3. Der dritte Radius R3 ist vorzugsweise kleiner als der zweite Radius R2 und/oder größer als der erste Radius R1. Beim Ausführungsbeispiel kann der dritte Radius R3 um den Faktor 1,2 - 1,6 und beispielsgemäß um den Faktor 1,4 größer sein als der erste Radius R1.

Der zweite Radius R2 bzw. der konvexe Flächenabschnitt geht beispielsgemäß tangential und somit stufen- und kantenlos in eine parallel zur Arbeitsrichtung A ausgerichtete Mantelfläche 56a des zweiten Ringabschnitts 56 über. Jeder Teil der Mantelfläche 56a des zweiten Ringabschnitts 56 ist parallel zur einem in Arbeitsrichtung A vorhergehenden Teil der Mantelfläche 55b des ersten Ringabschnitts 55 ausgerichtet.

Beim vorliegenden Ausführungsbeispiel werden rechteckförmige Behälter 41, 65 umgeformt werden, bilden die Mantelflächen 55b, 56a jeweils einen im Wesentlichen rechteckförmigen Ring, der um die Arbeitsrichtung A herum geschlossen ist. Die beiden Mantelflächen 55b, 56a sind wie beschrieben durch den konkaven Flächenabschnitt mit dem ersten Radius R1 und den sich tangential anschließenden konvexen Flächenabschnitt mit dem zweiten Radius R2 stufen- und kantenlos miteinander verbunden.

Die Abmessungen des Zwischenbehälters 77 in Breitenrichtung B und in Längsrichtung L entsprechen sowohl innen als auch außen dem herzustellenden Batteriezellenbehälter 21. Zur Herstellung der Maßhaltigkeit in Höhenrichtung H wird der Zwischenbehälter 77 beispielsgemäß aus der zweiten Abstreckstation 28 entlang der Transportebene T in die Trennstation 31 transportiert. Dort wird mit Hilfe der Trenneinrichtung 32 der sich an die Öffnung 81 des Zwischenbehälters 77 anschließende Rand 82 abgetrennt. Eine Trennlinie 83, entlang der der Rand 82 abgetrennt wird, ist in Figur 13 schematisch gestrichelt eingezeichnet. Die Trennlinie 83 befindet sich zwischen dem randseitigen Abschnitt 70 und der Auflagestufe 62 bzw. der Auflagefläche 63. Der Rand 82 kann einem Recyclingprozess zugeführt werden.

Der nach dem Abtrennen des Randes 82 erhaltene Batteriezellenbehälter 21 ist in den Figuren 14 und 15 veranschaulicht. Er weist einen Boden 90 auf, der einer Öffnung 91 des Batteriezellenbehälters 21 gegenüberliegt. Die Öffnung 91 wird durch vier Seitenwände begrenzt, nämlich zwei sich gegenüberliegende Längsseitenwände 92 und zwei sich gegenüberliegende Breitenseitenwände 93. Die Seitenwände 92, 93 schließen sich integral ohne Naht- und Fügestelle an den Boden 90 und an die jeweils benachbarte Seitenwand 93 bzw. 92 an. In Höhenrichtung H mit Abstand zur Öffnung 91 ist die Auflagefläche 63 der Auflagestufe 62 vorhanden und der Öffnung 91 zugewandt. Dort kann ein Deckel zum Verschließen des Batteriezellenbehälters 21 aufgelegt werden.

Der Batteriezellenbehälter 21 hat eine quaderförmige Gestalt. Die beiden Längsseitenwände 92 bzw. die beiden Breitenseitenwände 93 sind jeweils parallel zueinander ausgerichtet. An der Außenseite des Batteriezellenbehälters 21 hat es eine Außenabmessung al in Längsrichtung L, die mindestens um den Faktor 4 bis 5 und beispielsgemäß mindestens um den Faktor 7 größer ist als eine Außenabmessung ab in Breitenrichtung B. Die Außenabmessung al des Batteriezellenbehälters 21 ist maximal um den Faktor 15 größer als die Außenabmessung ab in Breitenrichtung B. Eine Außenabmessung ah des Batteriezellenbehälters 21 in Höhenrichtung H kann größer, gleich groß oder kleiner sein als die Außenabmessung ab in Breitenrichtung B. Beispielsgemäß ist die Außenabmessung ah in Höhenrichtung H deutlich kleiner als die Außenabmessung al in Längsrichtung L.

Beim beispielsgemäßen Verfahren wird der fließgepresste Behälter 41 vor dem ersten Abstreckgleitziehen und/oder vor dem zweiten Abstreckgleitziehen mit einem Schmiermittel versehen, zumindest an den Außenseiten der Seitenwände 43, 44, um die Reibung zwischen den Behältern und dem betreffenden Matrizenwerkzeug 27, 30 zu optimieren. Als Schmiermittel kann beispielsweise ein Ziehöl verwendet werden.

Die Erfindung betrifft ein Verfahren und eine Vorrichtung 20 zur Herstellung eines prismatischen, einseitig offenen Batteriezellenbehälters 21. Zunächst wird aus einem Butzen 38 durch Fließpressen ein fließgepresster Behälter 41 geformt. Der Butzen 38 besteht aus einem einheitlichen Material. Der fließgepresste Behälter 41 wird anschließend durch ein erstes Abstreckgleitziehen in einer ersten Abstreckstation 25 und durch ein zweites Abstreckgleitziehen in einer zweiten Abstreckstation 28 umgeformt. Bei dem Abstreckgleitziehen wird der Behälter durch einen jeweiligen Abstreckstößel 26, 29 nur teilweise durch ein zugeordnetes Matrizenwerkzeug 27, 30 bewegt und bei Erreichen eines Umkehrpunktes U wieder zurückbewegt. Nach dem zweiten Abstreckgleitziehen wird ein verbleibender Rand 82 des erhaltenen Zwischenbehälters 77 abgetrennt, wodurch der Batteriezellenbehälter 21 erhalten wird.

### Bezugszeichenliste:

- 20: Vorrichtung
- 21: Batteriezellenbehälter
- 22: Fließpressstation
- 23: Pressstempel
- 24: Pressform
- 25: erste Abstreckstation
- 26: erster Abstreckstößel
- 27: erstes Matrizenwerkzeug
- 28: zweite Abstreckstation
- 29: zweiter Abstreckstößel
- 30: zweites Matrizenwerkzeug
- 31: Trennstation
- 32: Trenneinrichtung

- 38: Butzen
- 39: Innenwand der Pressform
- 40: Spalt
- 41: fließgepresster Behälter
- 42: Boden des fließgepressten Behälters
- 43: Breitenseitenwand des fließgepressten Behälters
- 44: Längsseitenwand des fließgepressten Behälters
- 45: Eckbereich des fließgepressten Behälters

- 50: Stirnfläche des ersten Abstreckstößels
- 51: Gegenhalter
- 52: Stützfläche
- 53: Vorspanneinrichtung
- 54: erster Abstreckring
- 55: erster Ringabschnitt
- 55a: Einführfläche
- 55b: Mantelfläche des ersten Ringabschnitts
- 56: zweiter Ringabschnitt
- 56a: Mantelfläche des zweiten Ringabschnitts
- 60: Vorsprung
- 61: Vorsprungsfläche
- 62: Auflagestufe
- 63: Auflagefläche

- 65: abgestreckter Behälter
- 66: Boden des abgestreckten Behälters
- 67: Längsseitenwand des abgestreckten Behälters
- 68: Breitenseitenwand des abgestreckten Behälters
- 69: Öffnung des abgestreckten Behälters
- 70: randseitiger Abschnitt
- 71: Abstreifeinrichtung

- 75: Transfereinrichtung
- 76: zweiter Abstreckring
- 77: Zwischenbehälter
- 78: Boden des Zwischenbehälters
- 79: Längsseitenwand des Zwischenbehälters
- 80: Breitenseitenwand des Zwischenbehälters
- 81: Öffnung des Zwischenbehälters
- 82: Rand des Zwischenbehälters
- 83: Trennlinie

- 90: Boden des Batteriezellenbehälters
- 91: Öffnung des Batteriezellenbehälters
- 92: des Batteriezellenbehälters
- 93: des Batteriezellenbehälters

- α: Neigungswinkel
- A: Arbeitsrichtung
- ab: Außenabmessung in Breitenrichtung des Batteriezellenbehälters
- ah: Außenabmessung in Höhenrichtung des Batteriezellenbehälters
- al: Außenabmessung in Längsrichtung des Batteriezellenbehälters
- B: Breitenrichtung
- dy: Differenz zwischen maximaler und minimaler Breite
- dz: Differenz zwischen maximaler und minimaler Höhe
- F: Vorspannkraft
- H: Höhenrichtung
- L: Längsrichtung
- R: Rückzugsrichtung
- R1: erster Radius
- R2: zweiter Radius
- R3: dritter Radius
- sb: Dicke des Bodens des fließgepressten Behälters
- sw: Stärke der Seitenwand des fließgepressten Behälters
- T: Transportebene
- U: Umkehrposition
- x: Länge des fließgepressten Behälters
- y: Breite des fließgepressten Behälters
- ymax: maximale Breite des fließgepressten Behälters
- ymin: minimale Breite des fließgepressten Behälters
- z: Höhe der Seitenwände des fließgepressten Behälters
- zmax: maximale Höhe der Seitenwände des fließgepressten Behälters
- zmin: minimale Höhe der Seitenwände des fließgepressten Behälters

## Patentansprüche

1. Verfahren zur Herstellung eines einseitig offenen, prismatischen Batteriezellenbehälters (21) mit folgenden Schritten:
- Bereitstellen eines Butzens (38), der zwischen seinen beiden Längsendbereichen eine Länge aufweist, die gegenüber einer Breite des Butzens (38) um einen Faktor von mindestens 4-5 größer ist und der in den beiden Längsendbereichen im Anschluss an die kurzen Seiten eine größere Querschnittsfläche aufweist als in einem mittleren Bereich zwischen den beiden Längsendbereichen,
- Herstellen eines einseitig offenen fließgepressten Behälters (41) durch Fließpressen des Butzens (38),
- erstes Abstreckgleitziehen des fließgepressten Behälters (41) in einen abgestreckten Behälter (65) in einer ersten Abstreckstation (25), wobei der fließgepresste Behälter (41) mittels eines ersten Abstreckstößels (26) in einer Arbeitsrichtung (A) teilweise durch ein erstes Matrizenwerkzeug (27) bewegt und entgegen der Arbeitsrichtung (A) in einer Rückzugsrichtung (R) herausbewegt wird,
- zweites Abstreckgleitziehen des abgestreckten Behälters (65) in einen Zwischenbehälter (77) in einer zweiten Abstreckstation (28), wobei der abgestreckte Behälter (65) mittels eines zweiten Abstreckstößels (29) in der Arbeitsrichtung (A) teilweise durch ein zweites Matrizenwerkzeug (30) bewegt und entgegen der Arbeitsrichtung (A) in einer Rückzugsrichtung (R) herausbewegt wird,
- Abtrennen eines oberen Randes (82) des Zwischenbehälters (77) zur Bildung des Batteriezellenbehälters (21).

2. Verfahren nach Anspruch 1,
**dadurch gekennzeichnet, dass** der fließgepresste Behälter (41) einen mehreckigen Boden (42) aufweist, dessen Dimension in eine Richtung (L) mindestens um den Faktor 4 bis 7 größer ist als in eine andere Richtung (B), wobei die beiden Richtungen (L, B) rechtwinkelig zueinander ausgerichtet sind.

3. Verfahren nach Anspruch 2,
**dadurch gekennzeichnet, dass** der Boden (42) des fließgepressten Behälters (41) vier Eckbereiche (45), zwei Längsseiten und zwei Breitenseiten aufweist.

4. Verfahren nach Anspruch 3,
**dadurch gekennzeichnet, dass** der fließgepresste Behälter (41) im Anschluss an jede Längsseite des Bodens (42) eine Längsseitenwand (44) aufweist, die sich gegenüberliegen und die sich voneinander weg wölben.

5. Verfahren nach Anspruch 4,
**dadurch gekennzeichnet, dass** der Abstand der Längsseitenwände (44) in der Mitte zwischen den Eckbereichen (45) um mindestens 5% bis 10% größer ist als der Abstand an den Eckbereichen (45).

6. Verfahren nach einem der vorhergehenden Ansprüche,
**dadurch gekennzeichnet, dass** die Dicke (sb) des Bodens (42) des fließgepressten Behälters (41) kleiner ist als die Wandstärke (sw) der Seitenwände (43, 44) des fließgepressten Behälters (41).

7. Verfahren nach einem der vorhergehenden Ansprüche,
**dadurch gekennzeichnet, dass** ein Sollwert für die Wandstärke (sw) der Seitenwände (43, 44) des fließgepressten Behälters (41) zwischen 0,5 Millimetern und 1,5 Millimetern oder zwischen 0,7 Millimetern und 1,1 Millimetern beträgt.

8. Verfahren nach einem der vorhergehenden Ansprüche,
**dadurch gekennzeichnet, dass** die Wandstärke (sw) der Seitenwände (43, 44) des fließgepressten Behälters (41) maximal um 0,3 Millimeter oder maximal um 0,1 Millimeter von einem vorgegebenen Sollwert abweicht.

9. Verfahren nach einem der vorhergehenden Ansprüche,
**dadurch gekennzeichnet, dass** auf den fließgepressten Behälter (41) vor dem ersten Abstreckgleitziehen ein Schmierstoff aufgebracht wird.

10. Verfahren nach einem der vorhergehenden Ansprüche,
**dadurch gekennzeichnet**, beim ersten Abstreckgleitziehen und/oder beim zweiten Abstreckgleitziehen eine Auflagestufe (62) mit einem vorgegebenen Höhenabstand (z) zum Boden (66, 78) in den Seitenwänden des abgestreckten Behälters (65) und/oder des Zwischenbehälters (77) gebildet wird.

11. Verfahren nach Anspruch 10,
**dadurch gekennzeichnet, dass** der erste Abstreckstößel (26) und/oder der zweite Abstreckstößel (29) zur Bildung der Auflagestufe (62) einen Vorsprung (60) aufweist, der mit dem Höhenabstand (z) entfernt von der Stirnfläche (50) des betreffenden Abstreckstößels (26, 29) angeordnet ist.

12. Verfahren nach einem der vorhergehenden Ansprüche,
**dadurch gekennzeichnet, dass** die Wandstärke (sw) der Seitenwände des fließgepressten Behälters (41) beim ersten Abstreckgleitziehen zwischen 5% und 30% reduziert wird.

13. Verfahren nach Anspruch 12,
**dadurch gekennzeichnet, dass** die Wandstärke (sw) der Seitenwände des fließgepressten Behälters (41) beim ersten Abstreckgleitziehen zwischen 10% und 20% reduziert wird.

14. Verfahren nach einem der vorhergehenden Ansprüche,
**dadurch gekennzeichnet, dass** die Wandstärke (sw) der Seitenwände (67, 68) des abgestreckten Behälters (65) beim zweiten Abstreckgleitziehen um weniger als 1% reduziert wird.

15. Anordnung aufweisend einen Butzen (38) und eine Vorrichtung (20) zur Herstellung eines einseitig offenen, prismatischen Batteriezellenbehälters (21),
wobei der Butzen (38) zwischen seinen beiden Längsendbereichen eine Länge aufweist, die gegenüber einer Breite des Butzens (38) um einen Faktor von mindestens 4-5 größer ist und der in den beiden Längsendbereichen im Anschluss an die kurzen Seiten eine größere Querschnittsfläche aufweist als in einem mittleren Bereich zwischen den beiden Längsendbereichen,
wobei die Vorrichtung zur Durchführung des Verfahrens nach einem der vorhergehenden Ansprüche eingerichtet ist und aufweist:
- eine Fließpressstation (22) aufweisend einen Pressstempel (23) und eine einseitig offene Pressform (24),
- eine erste Abstreckstation (25), die einen in einer Arbeitsrichtung (A) und entgegen der Arbeitsrichtung (A) in einer Rückzugsrichtung (R) bewegbaren ersten Abstreckstößel (26) und ein erstes Matrizenwerkzeug (27) aufweist,
- eine zweite Abstreckstation (28), die einen in der Arbeitsrichtung (A) und in der Rückzugsrichtung (R) bewegbaren zweiten Abstreckstößel (29) und ein zweites Matrizenwerkzeug (30) aufweist, und
- eine Trennstation (31), die eine Trenneinrichtung (32) zum Abtrennen eines Randes (82) von einem Zwischenbehälter (77) aufweist.

## Claims

1. Method for manufacturing a unilaterally open prismatic battery cell container (21) with the following steps:
- providing a slug (38), which has a length between its two length end regions that is about a factor of minimum 4-5 greater than a width of the slug (38) and which comprises a larger cross-section area in the two adjacent length end regions adjacent to the short sides than in a mid region between the two length end regions,
- manufacturing a unilaterally open extruded container (41) by extrusion of the slug (38),
- first ironing of the extruded container (41) into an ironed container (65) in a first ironing station (25), wherein the extruded container (41) is partly moved through a first die tool (27) in working direction (A) and out of the first die tool (27) opposite the working direction (A) in a retracting direction (R) by a first ironing ram (26),
- second ironing of the ironed container (65) in an intermediate container (77) in a second ironing station (28), wherein the ironed container (65) is partly moved through a second die tool (30) in working direction (A) and out of the second die tool (30) opposite the working direction (A) in a retracting direction (R) by a second ironing ram (29),
- separating an upper edge (82) of the intermediate container (77) for forming the battery cell container (21).

2. Method according to claim 1,
**characterized in that** the extruded container (41) comprises a polygonal bottom (42), the dimension thereof in a direction (L) is at least about the factor 4- to 7-times larger than in another direction (B), wherein the two directions (L, B) are orientated rectangular to each other.

3. Method according to claim 2,
**characterized in that** the bottom (42) of the extruded container (41) comprises four corner regions (45), two length sides and two width sides.

4. Method according to claim 3,
**characterized in that** the extruded container (41) comprises adjacent to each length side of the bottom (42) one length side wall (44) that oppose each other and that camber away from each other.

5. Method according to claim 4,
**characterized in that** the distance between the length side walls (44) in the middle between the corner regions (45) is at least 5% to 10% greater than the distance in the corner regions (45).

6. Method according to any of the preceding claims,
**characterized in that** the thickness (sb) of the bottom (42) of the extruded container (41) is smaller than the wall thickness (sw) of the side walls (43, 44) of the extruded container (41).

7. Method according to any of the preceding claims,
**characterized in that** a target value for the wall thickness (sw) of the side walls (43, 44) of the extruded container (41) is between 0.5 mm and 1.5 mm or between 0.7 mm and 1.1 mm.

8. Method according to any of the preceding claims,
**characterized in that** the wall thickness (sw) of the side walls (43, 44) of the extruded container (41) deviates at most by 0.3 mm or at most by 0.1 mm from a predetermined target value.

9. Method according to any of the preceding claims,
**characterized in that** lubricant is supplied on the extruded container (41) before the first ironing.

10. Method according to any of the preceding claims,
**characterized in that** during the first ironing and/or during the second ironing a rest step (62) with a predefined height distance (z) from the bottom (66, 78) is formed in the side walls of the ironed container (65) and/or the intermediate container (77).

11. Method according to claim 10,
**characterized in that** the first ironing ram (26) and/or the second ironing ram (29) comprise a protrusion (60) for forming the rest step (62) that is arranged with the height distance (z) away from the end face (50) of the respective ironing ram (26, 29).

12. Method according to any of the preceding claims,
**characterized in that** the wall thickness (sw) of the side walls of the extruded container (41) is reduced between 5% and 30% during the first ironing.

13. Method according to claim 12,
**characterized in that** the wall thickness (sw) of the side walls of the extruded container (41) is reduced between 10% and 20% during the first ironing.

14. Method according to any of the preceding claims,
**characterized in that** the wall thickness (sw) of the side walls (67, 68) of the ironed container (65) is reduced by less than 1% during the second ironing.

15. Arrangement comprising a slug (38) and a device (20) for manufacturing a unilaterally open prismatic battery cell container (21),
wherein the slug (38) comprises a length between its two length end regions that is about a factor of minimum 4-5 greater than a width of the slug (38) and which comprises a larger cross-section area in the two adjacent length end regions adjacent to the short sides than in a mid region between the two length end regions,
wherein the device is configured to carry out the method according to any of the preceding claims and comprises:
- an extrusion press station (22) comprising a press ram (23) and a unilaterally open press mold (24),
- a first ironing station (25), comprising a first ironing ram (26) moveably in a working direction (A) and opposite the working direction (A) in a retracting direction (R) and a first die tool (27),
- a second ironing station (28), comprising a second ironing ram (29) moveable in working direction (A) and in retracting direction (R) and a second die tool (30), and
- a separating station (31), comprising a separating device (32) for separating an edge (82) from an intermediate container (77).

## Revendications

1. Procédé de fabrication d'un récipient prismatique pour élément de batterie (21) ouvert sur un côté, comprenant les étapes suivantes :
- mise à disposition d'une pastille (38) qui présente, entre ses deux zones d'extrémité longitudinales, une longueur qui est supérieure d'un facteur d'au moins 4 à 5 à une largeur de la pastille (38), et qui présente, dans les deux zones d'extrémité longitudinales, à la suite des petits côtés, une aire de section transversale plus grande que dans une partie intermédiaire entre les deux zones d'extrémité longitudinales,
- fabrication d'un récipient (41) extrudé ouvert sur un côté, par extrusion de la pastille (38),
- premier emboutissage-étirage de parois du récipient extrudé (41) pour former un récipient étiré (65) dans un premier poste d'étirage de parois (25), le récipient extrudé (41) étant déplacé au moyen d'un premier coulisseau d'étirage de parois (26) dans une direction de travail (A), en partie à travers un premier outil de matrice (27), et étant retiré dans une direction de retrait (R) opposée à la direction de travail (A),
- deuxième emboutissage-étirage de parois du récipient étiré (65) pour former un récipient intermédiaire (77) dans un deuxième poste d'étirage de parois (28), le récipient étiré (65) étant déplacé au moyen d'un deuxième coulisseau d'étirage de parois (29) dans la direction de travail (A), en partie à travers un deuxième outil de matrice (30), et étant retiré dans une direction de retrait (R) opposée à la direction de travail (A),
- découpe d'un bord supérieur (82) du récipient intermédiaire (77) pour former le récipient d'élément de batterie (21).

2. Procédé selon la revendication 1,
**caractérisé en ce que** le récipient extrudé (41) présente un fond (42) polygonal dont la dimension dans une direction (L) est supérieure au moins du facteur 4 à 7 à celle dans une autre direction (B), les deux directions (L, B) étant orientées à angle droit l'une par rapport à l'autre.

3. Procédé selon la revendication 2,
**caractérisé en ce que** le fond (42) du récipient extrudé (41) présente quatre zones d'angle (45), deux grands côtés et deux petits côtés.

4. Procédé selon la revendication 3,
**caractérisé en ce que** le récipient extrudé (41) présente, à la suite de chaque grand côté du fond (42), une paroi latérale longitudinale (44), parois qui sont situées en vis-à-vis l'une de l'autre et sont incurvées dans des directions opposées.

5. Procédé selon la revendication 4,
**caractérisé en ce que** la distance des parois latérales longitudinales (44), au milieu entre les zones d'angle (45), est supérieure d'au moins 5 % à 10 % à la distance dans les zones d'angle (45).

6. Procédé selon une des revendications précédentes,
**caractérisé en ce que** l'épaisseur (sb) du fond (42) du récipient extrudé (41) est inférieure à l'épaisseur de paroi (sw) des parois latérales (43, 44) du récipient extrudé (41).

7. Procédé selon une des revendications précédentes,
**caractérisé en ce qu'**une valeur de consigne pour l'épaisseur de paroi (sw) des parois latérales (43, 44) du récipient extrudé (41) est comprise entre 0,5 millimètre et 1,5 millimètres ou entre 0,7 millimètre et 1,1 millimètres.

8. Procédé selon une des revendications précédentes,
**caractérisé en ce que** l'épaisseur de paroi (sw) des parois latérales (43, 44) du récipient extrudé (41) s'écarte au maximum de 0,3 millimètre ou au maximum de 0,1 millimètre d'une valeur de consigne prédéfinie.

9. Procédé selon une des revendications précédentes,
**caractérisé en ce qu'**un lubrifiant est appliqué sur le récipient extrudé (41) avant le premier emboutissage-étirage de parois.

10. Procédé selon une des revendications précédentes,
**caractérisé en ce que** lors du premier emboutissage-étirage de parois et/ou lors du deuxième emboutissage-étirage de parois, un gradin d'appui (62) est formé dans les parois latérales du récipient étiré (65) et/ou du récipient intermédiaire (77), à une distance en hauteur (z) prédéfinie du fond (66, 78).

11. Procédé selon la revendication 10,
**caractérisé en ce que**, pour former le gradin d'appui (62), le premier coulisseau d'étirage de parois (26) et/ou le deuxième coulisseau d'étirage de parois (29) présente une saillie (60) qui est disposée à la distance en hauteur (z) par rapport à la face frontale (50) du coulisseau d'étirage de parois (26, 29) correspondant.

12. Procédé selon une des revendications précédentes,
**caractérisé en ce que** l'épaisseur de paroi (sw) des parois latérales du récipient extrudé (41) est réduite de 5 % à 30 % lors du premier emboutissage-étirage de parois.

13. Procédé selon la revendication 12,
**caractérisé en ce que** l'épaisseur de paroi (sw) des parois latérales du récipient extrudé (41) est réduite de 10 % à 20 % lors du premier emboutissage-étirage de parois.

14. Procédé selon une des revendications précédentes,
**caractérisé en ce que** l'épaisseur de paroi (sw) des parois latérales (67, 68) du récipient étiré (65) est réduite de moins de 1 % lors du deuxième emboutissage-étirage de parois.

15. Agencement comprenant une pastille (38) et un dispositif (20) de fabrication d'un récipient prismatique pour élément de batterie (21) ouvert sur un côté,
dans lequel la pastille (38) présente, entre ses deux parties d'extrémité longitudinales, une longueur qui est supérieure d'un facteur d'au moins 4 à 5 à une largeur de la pastille (38), et qui présente, dans les deux parties d'extrémité longitudinales, à la suite des petits côtés, une aire de section transversale plus grande que dans une partie intermédiaire entre les deux parties d'extrémité longitudinales,
le dispositif étant agencé pour la mise en œuvre du procédé selon une des revendications précédentes, et présentant :
- un poste d'extrusion (22) présentant un piston de presse (23) et un moule de presse (24) ouvert sur un côté,
- un premier poste d'emboutissage-étirage de parois (25) qui présente un premier coulisseau d'étirage de parois (26), pouvant être déplacé dans une direction de travail (A) et dans une direction de retrait (R) opposée à la direction de travail (A), et un premier outil de matrice (27).
- un deuxième poste d'emboutissage-étirage de parois (28) qui présente un deuxième coulisseau d'étirage de parois (29), pouvant être déplacé dans la direction de travail (A) et dans la direction de retrait (R) opposée à la direction de travail (A), et un deuxième outil de matrice (30), et
- un poste de coupe (31) qui présente un dispositif de coupe (32) pour couper un bord (82) sur un récipient intermédiaire (77).
